# EUROPEAN PATENT SPECIFICATION

(11) **EP 1 860 354 B1**
(45) Date of publication and mention of the grant of the patent: **26.11.2008**
(21) Application number: 07010079.7
(22) Date of filing: 21.05.2007
(51) Int. Cl.: F16H 63/42, B60R 16/023

(54) **Transmission operation instruction device**
Vorrichtung zur Anzeige von Schaltbefehlen
Dispositif d'instruction de transmission

(30) Priority: 26.05.2006 JP 2006147197
(43) Date of publication of application: 28.11.2007
(73) Proprietor: Denso Corporation, Kariya-city, Aichi-pref. 448-8661 (JP)
(72) Inventor: Shimizu, Kenji, Kariya-city Aichi-pref., 448-8661 (JP); Suzuki, Yuko, Kariya-city Aichi-pref., 448-8661 (JP)
(74) Representative: Winter, Brandl, Fürniss, Hübner Röss, Kaiser, Polte Partnerschaft Patent- und Rechtsanwaltskanzlei

(56) References cited:
- EP-A1- 1 416 349
- DE-A1- 4 326 182
- DE-A1- 10 321 519
- DE-A1- 10 343 683
- DE-A1- 19 600 734
- US-A- 4 677 556
- US-A1- 2004 037 236

## Description

### BACKGROUND OF THE INVENTION

### 1. Field of the invention

The present invention relates to a transmission operation instruction device for a manual transmission mounted on a vehicle.

### 2. Description of the Related Art

There are well-known techniques regarding a transmission operation instruction device capable of displaying instructions for up-shift and down-shift operations of a manual transmission mounted on a vehicle in order to enhance the fuel consumption of the vehicle. For example, Japanese patent laid open publication No. JP S55-149451 has disclosed such a technique for instructing up-shift operation and down-shift operation for the vehicle. In addition to this, Japanese patent laid open publication No. JP H05-180339 has disclosed another technique capable of changing the timing of displaying the instruction for the transmission operation according to driver's preference and habit in driving.

Because the related-art techniques described above provides the instruction for the transmission operation to the driver while firstly considering the vehicle fuel economy, the instruction for the transmission operation is displayed to the driver regardless of weather condition, vehicular condition, and driver's condition. Accordingly, there is a possibility of causing the driver to perform a dangerous operation, for example a complicated operation, and of thereby distracting the driver's attention and of causing unexpected acceleration/deceleration of the vehicle due to the driver's complicated operation.

US 4,677,556 A discloses a device according to the preamble part of claim 1. Further information about the prior art can be derived from US 2004/0037236A which teaches to reduce the amount information presented to the driver, i.e., not to display an incoming message in case the cognitive workload is high, in a dangerous situation which would imply a high cognitive workload.

### SUMMARY OF THE INVENTION

It is an object of the present invention to provide a transmission operation instruction device for a manual transmission mounted on a vehicle capable of generating and outputting optimum instructions for the transmission operation with good fuel economy while keeping the driver safe.

At least the afore object is solved by the features of claim 1. Further developments and advantageous embodiments of the present invention form the subject-matter of the dependent claims.

To achieve the above purposes, the present invention provides a transmission operation instruction device for a manual transmission mounted on a vehicle. In particular, a control means selects one of a standard mode firstly considering fuel economy of the vehicle and a safety consideration mode firstly considering driver's safety based on information provided from one or more car navigation units, a traffic information detection unit, a sideslip protection unit, and a brake control unit. In particular, the control means instructs a transmission operation instruction display unit to delay the timing of displaying the instruction for the transmission operation or to prohibit the display of the instruction for the transmission operation on selecting the safety consideration mode when compared with on selecting the standard mode.

There is a possibility of not always keeping the driver's safety and vehicular safety by the instruction for the transmission operation under the standard mode firstly considering the vehicular fuel consumption. According to the present invention, on selecting the safety consideration mode, the control means instructs the transmission operation instruction display unit to delay the timing of displaying the instruction for the transmission operation when compared with that under the standard mode or to prohibit the display of the instruction on transmission operation instruction display unit. Thus, it is possible for the driver of the vehicle to perform the transmission operation suppressing a low speed driving and an accelerated speed by considering the actual traffic condition and vehicular driving condition while keeping the driver's safety with good fuel consumption.

In the transmission operation instruction device as another aspect of the present invention, the control means selects the safety consideration mode in order to prevent a shifting operation from the current gear position to a higher gear position when the information provided from the traffic information detection unit indicates the occurrence of traffic congestion or a traffic accident. According to the present invention, on detecting traffic congestion and traffic accidents based on traffic information provided from the traffic information detection unit, the control means selects the safety consideration mode and prevents shifting operation from the current gear position to a higher gear position. Because there is a high probability of driving the vehicle at a low speed or of stopping the vehicle when traffic congestion or a traffic accident is detected, it is possible to provide the instruction for the transmission operation without any accelerated speed for the driver.

In the transmission operation instruction device as another aspect of the present invention, the control means selects one of the safety consideration mode and the standard mode based on time information or weather information provided from the traffic information detection unit. According to the present invention, on selecting the safety consideration mode, it is possible to display the instruction for the transmission operation without any accelerated speed while considering a low-speed driving and a stop of the vehicle under a driver's bad visibility in an early morning, an evening, a night, and rain falling. In addition, in a bad weather, the control means also selects the safety consideration mode and instructs the transmission operation instruction display unit to display the instruction for the transmission operation without any accelerated speed in order to prevent occurrence of side slide and a slip of the vehicle.

In the transmission operation instruction device as another aspect of the present invention, the control means selects one of the safety consideration mode and the standard mode based on map information provided from the car navigation unit. On selecting the safety consideration mode, it is possible to display the instruction for the transmission operation without any accelerated speed in the area near a curve, a sharp curve, and a traffic junction based on the map information where the vehicle must drive at a low speed or stop. In addition, on selecting the safety consideration mode, it is possible to display the instruction for the transmission operation with low speed driving and without any accelerated speed in an unknown area for the driver or the target place of the car navigation unit.

In the transmission operation instruction device as another aspect of the present invention, the control means selects the safety consideration mode when the sideslip protection unit detects the occurrence of sideslip of the vehicle or the brake control unit detects the occurrence of quick brake of the driver. On selecting the safety consideration mode based on the detection of the occurrence of a sideslip of the vehicle by the sideslip detection unit and of a quick brake of the driver by the brake control unit, it is possible to display the instruction for the transmission operation without any accelerated speed.

In the transmission operation instruction device as another aspect of the present invention, the optimum gear position calculation means calculates the optimum gear position corresponding to the vehicle speed and the accelerator pedal opening ratio or the throttle opening ratio based on a shift point line. In addition, the transmission operation instruction device further has a power shift pattern changing means configured to select a power shift pattern which is shifted to a high speed side of the shift point line based on a vehicular weight or a weight of burden mounted on a vehicle. According to the present invention, it is possible to calculate the optimum gear position capable of smoothly performing acceleration/deceleration corresponding to the vehicle weight or the weight of burden mounted on the vehicle (or a vehicle carrying weight).

In the transmission operation instruction device as another aspect of the present invention, the control means calculates a response length of time of the driver counted from the time of displaying the instruction for the transmission operation on the transmission operation instruction display unit to the time of actually performing the transmission operation by the driver, and the control means instructs the transmission operation instruction display unit to delay the timing of displaying the instruction for the transmission operation by a time considering the response length of time of the driver when compared with the timing of displaying that under the standard mode. According to the present invention, it is possible to further delay the timing of performing the up-shift operation under the safety consideration mode, and thereby possible to display the instruction for the transmission operation suitable for the driver's condition.

In the transmission operation instruction device as another aspect of the present invention, the control means is configured to calculate a response length of time of the driver counted from the time of displaying the instruction for the transmission operation on the transmission operation instruction display unit to the time of actually performing the transmission operation by the driver. The control means is further configured to select the standard mode when the response length of time of the driver or a variation thereof is smaller than a threshold value and to select the safety consideration mode when larger than the threshold value. The control means is further configured to instruct the transmission operation instruction display unit to delay the timing of displaying the instruction for the transmission operation or to prohibit the display of the instruction for the transmission operation on selecting the safety consideration mode when compared with on selecting the standard mode.

According to the present invention, when the driver's response length of time is larger than the predetermined time, the control means judges that the driver has a bad physical condition or a poor health and then instructs the transmission control display unit to delay the instruction of the transmission operation without any accelerated speed. It is thereby possible to provide the instruction for the transmission operation capable of driving the vehicle with good fuel consumption while keeping the driver's safety.

In the transmission operation instruction device as another aspect of the present invention, the control means is configured to calculate a response length of time of the driver counted from the time of displaying the instruction for the transmission operation on the transmission operation instruction display unit to the time of actually performing the transmission operation by the driver after the brake control unit detects a quick brake of the driver. The control means is further configured to select the standard mode when the response length of time of the driver or a variation thereof is smaller than a threshold value and to select the safety consideration mode when larger than the threshold value. The control means is further configured to instruct the transmission operation instruction display unit to delay the timing of displaying the instruction for the transmission operation or to prohibit the display of the instruction for the transmission operation on selecting the safety consideration mode when compared with on selecting the standard mode.

According to the present invention, when the driver's response time or a variation of the driver's response time is detected after detecting a quick brake, the control means judges that the driver has an uneasy mind, and then instructs the transmission operation instruction display unit to display the instruction for the transmission operation without any accelerated speed capable of driving the vehicle with good fuel consumption while maintaining the driver's safety.

The transmission operation instruction device as another aspect of the present invention further comprises a buzzer. When selecting the safety consideration mode, the control means instructs the buzzer to sound or the transmission operation instruction display unit to change a display mode thereon. The driver can recognize that the current operation mode has been shifted to the safety consideration mode through the buzzer and the transmission operation instruction display unit. The driver can pay special attention to the driving of the vehicle.

### BRIEF DESCRIPTION OF THE DRAWINGS

A preferred, non-limiting embodiment of the present invention will be described by way of example with reference to the accompanying drawings, in which:
FIG.1 shows an entire configuration of a transmission operation instruction device according to a first embodiment of the present invention;
FIG. 2 is a flow chart showing the operation of the transmission operation instruction device according to the first embodiment;
FIG. 3 is a flow chart showing the operation of the transmission operation instruction device according to a second embodiment;
FIG. 4 is a flow chart showing the operation of the transmission operation instruction device according to a third embodiment;
FIG. 5 is a flow chart showing the operation of the transmission operation instruction device according to a fourth embodiment;
FIG. 6 is a flow chart showing the operation of the transmission operation instruction device according to a fifth embodiment;
FIG. 7A shows a shift pattern of the transmission operation; and
FIG. 7B shows a power shift pattern of the transmission operation.

### DETAILED DESCRIPTION OF THE PREFERRED EMBODIMENTS

Hereinafter, various embodiments of the present invention will be described with reference to the accompanying drawings. In the following description of the various embodiments, like reference characters or numerals designate like or equivalent component parts throughout the several diagrams.

### First embodiment

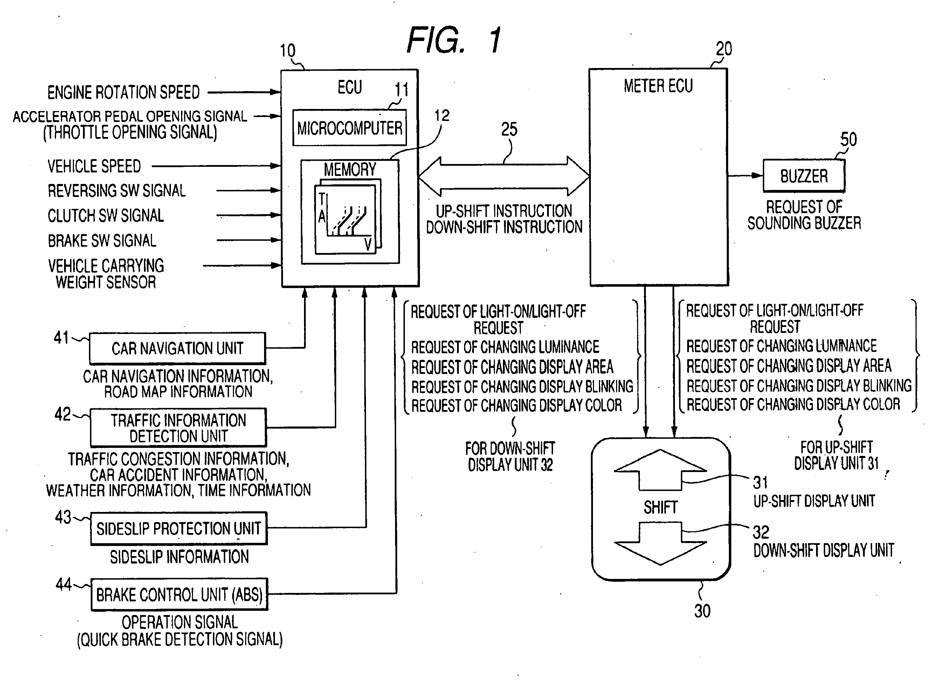

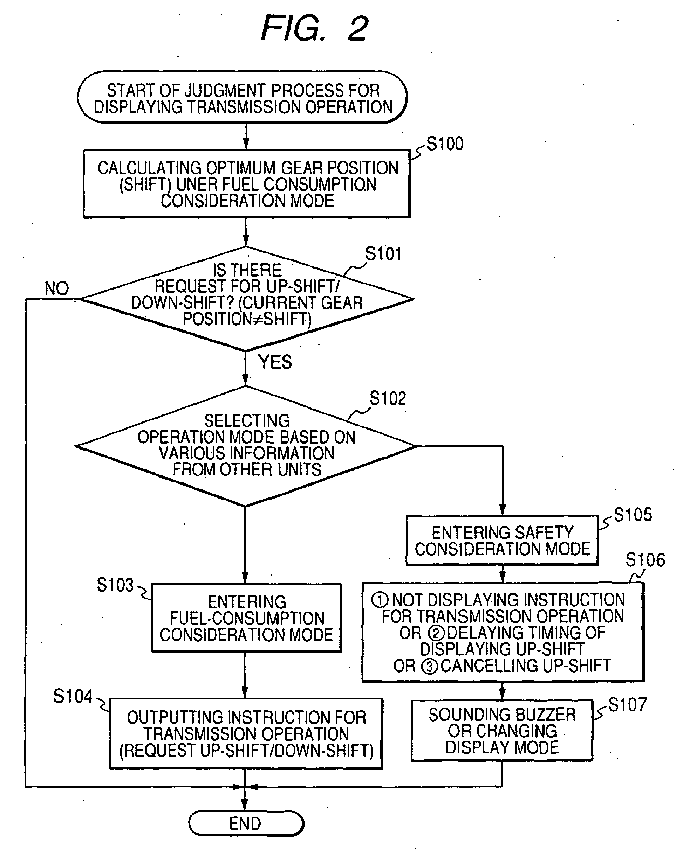

A description will be given of the transmission operation instruction device according to the first embodiment of the present invention with reference to FIG. 1 and FIG. 2.

FIG.1 shows an entire configuration of the transmission operation instruction device to be mounted on a vehicle according to the first embodiment.

The vehicle is further equipped with a manual transmission device in addition to the transmission operation instruction device according to the first embodiment. The transmission operation instruction device of the first embodiment has an electric control unit (ECU) 10 and a shift display device 30 which serves as an indicator. The shift display device 30 corresponds to the transmission operation instruction display unit as defined in claims of the present invention. Various instructions for the transmission operation are displayed on the shift display unit 30 displays and the driver of the vehicle 1 performs the shift operation according to the instructions displayed on the shift display unit 30. The shift display device 30 displays instructions for the transmission operation of the manual transmission to be performed by the driver of the vehicle 1. The ECU 10 is equipped with a microcomputer 11 and a memory 12. The ECU 10 inputs various types of signals such as an engine rotation speed signal, an accelerator pedal opening signal (or a throttle opening signal), a vehicle speed signal, a reverse switch signal, a clutch switch signal, a break switch signal and a signal from a vehicle weight sensor for detecting the weight of burden mounted on a vehicle.

As shown in FIG. 1, the ECU 10 is electrically connected to a meter electric control unit (or a meter ECU) 20 through a communication line 25 between the ECU 10 and the meter ECU 20. The shift display unit 30 is electrically connected to the meter ECU 20. The ECU 10 drives and controls the shift display unit 30 through the meter ECU 20.

The shift display unit 30 is equipped with an up-shift display unit 31 and a down-shift display unit 32. The meter ECU 20 generates and transfers request signals for turning on/off of the up-shift display unit 31 in the shift display unit 30. On receiving those request signals, the up-shift display unit 31 in the shift display unit 30 is turned on and off. The meter ECU 20 generates and transfers request signals for lighting of and light-out of the down-shift display unit 32 in the shift display unit 30. On receiving those request signals, the down-shift display unit 32 in the shift display unit 30 is turned on or off.

The ECU 10 is electrically connected to a car navigation unit (or a car navigation ECU) 41, a traffic information detection unit 42, a sideslip protection unit (or a sideslip protection ECU) 43 and a brake control unit (or an antilock brake ECU) 44. The ECU 10 inputs navigation information, road geographic information and the like through the car navigation unit 41. Further, the ECU 10 inputs traffic congestion information, traffic accident information, weather information, time information and the like through the traffic information detection unit 42. The ECU 10 inputs vehicle sideslip information through the sideslip protection unit 43. The ECU 10 further inputs an operation signal (as a hard braking detection signal) from the brake control unit 44.

The ECU 10 generates and transfers various request signals to the shift display unit 30 in order to control the display mode of the up-shift display unit 31 such as the requests for changing a display luminance, a display area, and display conditions regarding the display blinking and color, in addition to the turn-on/turn-off request signals.

Similar to the operation described above, the ECU 10 also generates and transfers various request signals to the shift display unit 30 in order to control the display mode of the down-shift display unit 32 such as the requests for changing the display luminance, the display area, and the display conditions regarding the display blinking and color, in addition to the turn-on request signal and the turn-off request signal.

On receiving those request signals, the up-shift display unit 31 and the down-shift display unit 32 in the shift display unit 30 change the display mode thereof such as the display luminance, the display area and the display blinking and color based on the received request signals. The driver operates the manual transmission device while watching the display mode on the up-shift display unit 31 and the down-shift display unit 32 in the shift display unit 30.

Further, the meter ECU 20 is electrically connected to an electronic buzzer or a beeper 50. The ECU 10 generates and transfers a request to sound the buzzer 50 through the meter ECU 20.

In the transmission operation instruction device according to the first embodiment, the microcomputer 11 forms an optimum gear position calculating means, a judgment means and a control means.

A description will now be given of the transmission operation instruction device having the above configuration with reference to FIG. 2.

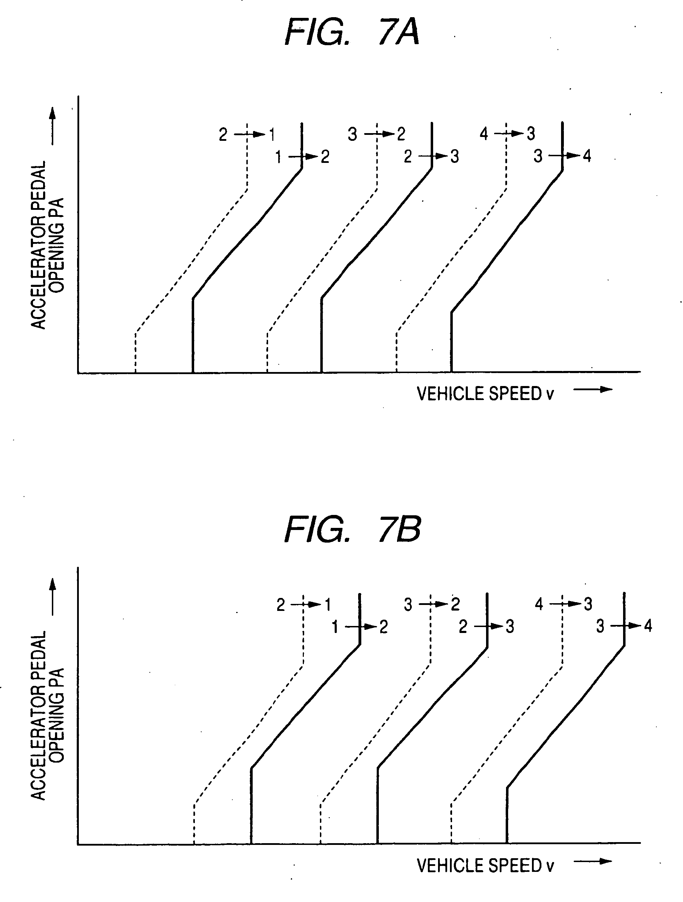

FIG. 2 is a flow chart showing the operation of the transmission operation instruction device according to the first embodiment. FIG. 7A shows a shift pattern of the transmission operation of the transmission operation instruction device.

As shown in FIG. 2, the microcomputer 11 in the ECU 10 calculates an optimum gear position (or an optimum gear ratio) in view of good fuel consumption (step S100).

For example, the shift pattern shown in FIG. 7A is stored in the memory 12 in the ECU 10 shown in FIG. 1. The shift pattern shown in FIG. 7A is data items regarding various changeable gear positions. In FIG. 7A, the horizontal line indicates a vehicle speed, and the vertical line indicates an accelerator pedal opening amount or ratio (or a throttle opening amount or ratio). The vehicle speed corresponds to the vehicle speed signal shown in FIG. 1 and the accelerator pedal opening amount corresponds to the accelerator pedal opening signal or the throttle opening signal shown in FIG. 1.

That is, FIG. 7A shows following shift point lines:
from a primary speed to a secondary speed;
from the secondary speed to a third speed;
from the third speed to a fourth speed;
from the secondary speed to the primary speed;
from the third speed to the secondary speed; and
from the fourth speed to the third speed.

The microcomputer 11 calculates the optimum gear position for the vehicle speed and the accelerator pedal opening ratio (or the throttle opening ratio) based on the shift point lines shown in FIG. 7A.

The microcomputer 11 judges whether or not there is the up-shift request or the down-shift request in step S101 shown in FIG. 2. The microcomputer 11 judges the presence of the up-shift request or the down-shift request when the current gear position is different from the optimum gear position calculated. That is, the microcomputer 11 judges whether or not the current gear position is different from the calculated optimum gear position. When the judgment result indicates the presence of the difference between them, the microcomputer 11 instructs the shift display unit 30 through the meter ECU 20 to display the transmission operation thereon. By the way, it is acceptable to calculate the gear position of the actual manual transmission device based on an engine rotation speed and a vehicle speed or the detection signal provided from a sensor for detecting the current position of the shift lever. (This manner can be applied to other embodiments of the present invention described later)

When the calculated optimum gear position is different from the current gear position, namely, from the current gear position of the manual transmission device, the operation flow goes to step S102 shown in FIG. 2. The microcomputer 11 selects the operation mode which is determined based on various types of information provided from the other units such as the car navigation unit 41, the traffic information detection unit 42, the sideslip protection unit 43 and the brake control unit 44. That is, the microcomputer 11 selects one of a fuel consumption consideration mode (as a standard mode) and a safety consideration mode. When selecting the fuel consumption consideration mode in step S102, the microcomputer 11 in the ECU 10 generates and outputs an instruction for the transmission operation (namely, outputs an instruction for performing a shift point operation of the manual transmission device by the driver) in step S104, that is, the microcomputer 11 outputs the up-shift request or the down-shift request to the shift display unit 30 through the meter ECU 20. When outputting the up-shift request, the microcomputer 11 instructs the shift display unit 30 through the meter ECU 20 in order to turn on the up-shift display unit 31. On the contrary, when outputting the down-shift request, the microcomputer 11 instructs the shift display unit 30 through the meter ECU 20 to turn on the down-shift display unit 32.

On the other hand, when selecting the safety consideration mode in step S102 based on the information provided from the other units 41, 42, 43 and 44, the current operation mode is shifted to the safety consideration mode in step S105. In the following step S106, the microcomputer 11 instructs the shift display unit 30 through the meter ECU 20 to turn off the display of the instruction for the transmission operation on the shift display unit 30, or to delay the timing of displaying the up-shift operation on the shift display unit 30, or to cancel the up-shift request.

When the optimum gear position is different from the current gear position of the manual transmission device, the microcomputer 11 selects optimum operation mode (one of the standard mode for firstly considering the fuel consumption or fuel economy, and the safety consideration mode for firstly keeping the driver's safety) by cooperating with one of the car navigation unit 41, the traffic information detection unit 42, the sideslip protection unit 43 and the brake control unit 44. In the safety consideration mode, the microcomputer 11 instructs the shift display unit 30 to delay the display for the instruction of the transmission operation on the shift display unit 30 when compared with that under the standard mode, or prohibits the display of the instruction for the transmission operation on the shift display unit 30.

A description will now be given of actual examples (first to fourth examples) of the transmission operation instruction device according to the first embodiment of the present invention.

### (First example)

When judging the traffic congestion based on the traffic information provided from the traffic information detection unit 42, the microcomputer 11 in the ECU 10 selects the safety consideration mode firstly considering the driver's safety and prohibits the display of the instruction for the transmission operation on the shift display unit 30 in order to prohibit the change to a higher gear position from the current gear position. In a concrete example, the microcomputer 11 in the ECU 10 selects the safety consideration mode in order to avoid the complicated gear shift operation by the driver and to avoid any occurrence of a car accident during the traffic congestion. Still further, when detecting a landslide or falling objects on the road on which the vehicle drives, the microcomputer 11 in the ECU 10 selects the safety consideration mode in order to suspend the accelerated speed driving of the vehicle.

### (Second example)

The microcomputer 11 selects the optimum operation mode for the driver in the vehicle based on time information and weather information supplied from the traffic information detection unit 42. In a concrete example, when detecting strong winds and storm such as a tropical cyclone or a typhoon, rain falling, heavy rain, heavy snow, the microcomputer 11 in the ECU 10 selects the safety consideration mode and prevents the accelerated speed driving by the driver of the vehicle. In order to avoid the occurrence of a rolling, a slide, a slip, a sideslip of the vehicle, the microcomputer 11 in the ECU 10 prohibits the up-shift operation, namely, the high-speed driving of the vehicle. Still further, the microcomputer 11 selects the safety consideration mode during a driver's bad visibility in the early morning, the evening and the night, and prevents the accelerated speed driving for the driver in the vehicle.

### (Third example)

The microcomputer 11 in the ECU 10 selects the optimum operation mode for the driver of the vehicle based on the map information provided from the car navigation unit 41. In a concrete example, when detecting a traffic point on the road such as a curve and a traffic junction where the vehicle speed must be decreased, the microcomputer 11 in the ECU 10 selects the safe consideration mode for decelerating the vehicle speed. Further, on driving on an unknown road for the driver, the microcomputer 11 selects the safe consideration mode for decelerating the vehicle speed. Still further, in the area near the target point or area to be arrived on the car navigation unit 41, the microcomputer 11 selects the safety consideration mode for decelerating the vehicle speed.

### (Fourth example)

The microcomputer 11 in the ECU 10 selects the optimum operation mode for the driver in the vehicle based on the vehicle condition. In a concrete example, when the sideslip protecting unit 43 detects the occurrence of a sideslip of the vehicle, the microcomputer 11 selects the safe consideration mode in order to decelerate the vehicle speed. Further, when detecting the driver's intent based on the information from the break control unit 44 and the driver's brake operation, the microcomputer 11 in the ECU 10 selects the safety consideration mode in order to decelerate the vehicle speed.

Returning to the explanation with reference to FIG. 2, after entering the safety consideration mode for the driver in the vehicle in step S105, the microcomputer 11 in the ECU 10 instructs the shift display unit 30 to change the display mode through the meter ECU 20 (in step S106) and instructs the buzzer 50 to sound through the meter ECU 20 (in step S107) when the vehicle enters the safety consideration mode. The driver thereby recognizes that the current mode of the vehicle enters the safety consideration mode. In step S106, there are various concrete manners of changing the display mode, for example, by selecting one or more luminance, a display area, a display color and a blinking of the up-shift display unit 31 and the down-shift display unit 32 in the shift display unit 30.

According to the transmission operation instruction device according to the first embodiment, the following effects (1) to (3) can be obtained.
(1) One of the operation modes such as the fuel consumption consideration mode (as the standard mode) and the safety consideration mode is selected by cooperating with the information provided from one of the car navigation unit 41, the traffic information detection unit 42, the sideslip protection unit 43 and the brake control unit 44, where the standard mode firstly considers the vehicular fuel consumption or fuel economy, and the safety consideration mode firstly considers the driver's safety. When selecting the safety consideration mode, the display of the instruction for the transmission operation on the shift display unit 30 is delayed when compared with that under the standard mode, or prohibited.
   There is a possibility of not always keeping the driver's safety (and the vehicle safety) in the fuel consumption consideration mode (as the standard mode). On the contrary, the safety consideration mode firstly considering the driver's safety enables the vehicle to drive at a low driving speed without acceleration because the safety consideration mode is capable of delaying the time of displaying the instruction for the transmission operation on the shift display unit 30 when compared with that of the fuel consumption consideration mode, or prohibits the display of the instruction for the transmission operation on the shift display unit 30 by considering the current traffic information, the driving conditions of the vehicle and the like. That is, it is possible for the transmission operation instruction device according to the first embodiment to instruct the transmission operation to the driver of the vehicle while keeping the driver's safety and vehicle safety with good fuel consumption and while providing the smooth driving corresponding to the actual traffic state and the actual driving conditions based on the current traffic information, the current weather information, and the actual driver's condition and vehicle condition.
   In particular, it is possible to predict the road condition such as a curve before the vehicle reaches the curve by cooperating with the information provided from the car navigation unit 41 and the traffic information detection unit 42. It is thereby possible to ensure the prohibition of instructing the transmission operation while the vehicle drives on the curve. That is, in case of halting the display of the instruction for the transmission operation when the current steering angle of the vehicle exceeds a predetermined angle, the instruction for the transmission operation is however displayed for a moment when the vehicle drives on a curve, it is possible to completely avoid to light (or avoid to display the instruction on) the up-shift display unit 31 and the down-shift display unit 32 by cooperating with the car navigation unit 41 and the traffic information detection unit 42.
(2) In detail, when detecting a traffic congestion or traffic accident based on the traffic information provided from the traffic information detection unit 42, the microcomputer 11 in the ECU 10 in the transmission operation instruction device selects the safety consideration mode in order to prohibit the display of the instruction for the transmission operation to a high gear position through the shift display unit 30. It is thereby possible to instruct the transmission operation without any accelerated speed for the vehicle because it seems to be the most probable that the low speed driving or the stop of the vehicle occurs when detecting the traffic congestion and the traffic accident.
   Still further, the microcomputer 11 in the ECU 10 in the transmission operation instruction device selects the optimum operation mode according to the time information and the weather information provided from the traffic information detection unit 42. That is, the microcomputer 11 selects the safety consideration mode when the bad visibility occurs. It is thereby possible to instruct the transmission operation without any accelerated speed for the vehicle by considering the low speed driving and stopping the vehicle under bad driving condition such as a night and rain falling making bad visibility. It is further possible to instruct the transmission operation without any accelerated speed driving for the vehicle in order to prevent the sideslip and rolling by selecting the safety consideration mode in the bad weather condition.
   Still further, the microcomputer 11 in the ECU 10 of the transmission operation instruction device selects the optimum operation mode based on the road map information provided from the car navigation unit 41. It is thereby possible to instruct the transmission operation without any accelerated speed for the vehicle by selecting the safety consideration mode when the vehicle comes near a heavy curve or a traffic junction where the vehicle speed must be decreased or the vehicle stops.
   Moreover, it is possible to instruct the transmission operation with a low speed driving and without any accelerated speed for the vehicle by selecting the safety consideration mode when the vehicle drives on an unknown road for the driver or when the vehicle comes near a target point or area indicated by the car navigation unit 41.
   Still moreover, the microcomputer 11 in the ECU 10 of the transmission operation instruction device selects the safety consideration mode when the sideslip protection unit 43 detects the occurrence of rolling or sideslip of the vehicle and when the brake control unit 44 detects that the vehicle rapidly accelerates or decelerates its speed. When detecting the occurrence of a sideslip of the vehicle or the driver's will or intent to decelerate the vehicle speed, the transmission operation instruction device can instruct the transmission operation without any accelerated speed for the vehicle.
(3) The transmission operation instruction device of the first embodiment instructs the shift display unit 30 to give a warning using the buzzer 50 to sound or to change the display mode when selecting the safety consideration mode. Accordingly, in order to call the driver's attention, it is informed to the driver of the vehicle that the current operation mode has entered the safety consideration mode. That is, it is possible to call the driver's attention by giving the warning using the buzzer 50 to sound and changing the display mode of the shift display unit 30 such as its luminance, display area, blinking, and color.

### Second embodiment

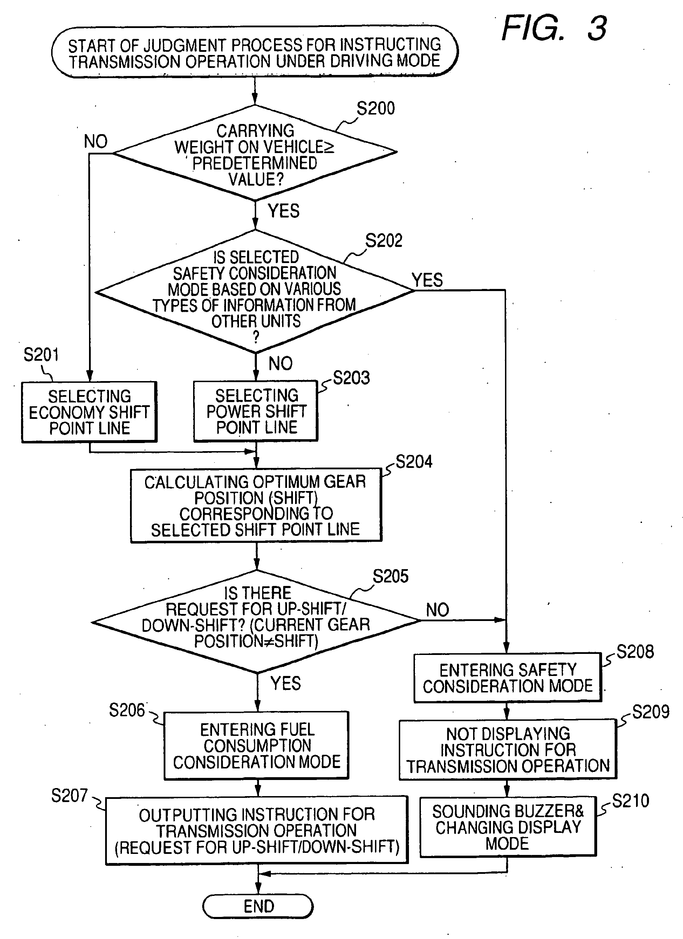

A description will be given of the action of the transmission operation instruction device according to the second embodiment of the present invention with reference to FIG. 3. FIG. 3 is a flow chart showing the operation of the transmission operation instruction device according to the second embodiment. The difference between the second embodiment and the first embodiment will be mainly explained.

When the weight of a burden mounted on a vehicle exceeds a predetermined weight in step S200, the microcomputer 11 judges whether or not the current operation mode is the safety consideration mode based on the various information (such as the traffic congestion information) including the information provided from the car navigation unit 41, the traffic information detection unit 42, the sideslip protection unit 43 and the brake control unit 44. For example, the microcomputer 11 in the ECU 10 judges whether or not there is a necessity of requesting to cancel the instruction of the transmission operation for the occurrence of the traffic congestion. It is acceptable to use the total weight of the vehicle instead of using the weight of the burden mounted on the vehicle.

In step S203, the microcomputer 11 in the ECU 10 selects a power shift pattern shown in FIG. 7B when there is no request to cancel the instruction for performing the transmission operation based on the information such as the traffic congestion. FIG. 7B shows the power shift pattern of the transmission operation in which the shift point line is shifted toward a high-speed driving side.

In the following step S204 shown in FIG. 3, the microcomputer 11 in the ECU 10 calculates the optimum gear position according to the power shift pattern shown in FIG. 7B.

After the process in step S204, the operation flow goes to step S205. In step S205, the microcomputer 11 judges whether or not the current gear position is the target gear position, in other words, judges whether or not there is the request for performing the up-shift operation or down-shift operation. When the judgment result indicates the presence of the request for performing the up-shift operation or the down-shift operation, the microcomputer 11 in the ECU 10 sets the current operation mode to the fuel consumption consideration mode (as the standard mode) in step S206, and generates and outputs the instruction according to the request for performing the up-shift operation or the down-shift operation.

On the contrary, the judgment result in step S202 indicates the necessity of canceling the instruction for performing the transmission operation based on the information such as the occurrence of the traffic congestion, namely, when the judgment result selects the safety consideration mode, the microcomputer 11 in the ECU 10 sets the current operation mode to the safety consideration mode in step S208 and then generates and outputs the instruction of not displaying the instruction for the transmission operation in step S209. The microcomputer 11 further instructs the buzzer 50 to sound through the meter ECU 20, or instructs the shift display unit 30 to change the display mode thereon through the meter ECU 20.

The transmission operation instruction device according to the second embodiment has the following effect. The microcomputer 11 in the ECU 10 further has a power shift pattern changing means capable of selecting the power shift pattern according to the weight of the vehicle or the weight of burden mounted on the vehicle, where the power shift pattern is obtained by shifting the shift position line shown in FIG. 7A to the higher-speed operation side. It is thereby possible to calculate the optimum gear position capable of smoothly accelerating and of performing the safe acceleration/deceleration operation by selecting the optimum shift pattern according to the weight of the vehicle or the weight of a burden mounted on the vehicle.

### Third embodiment

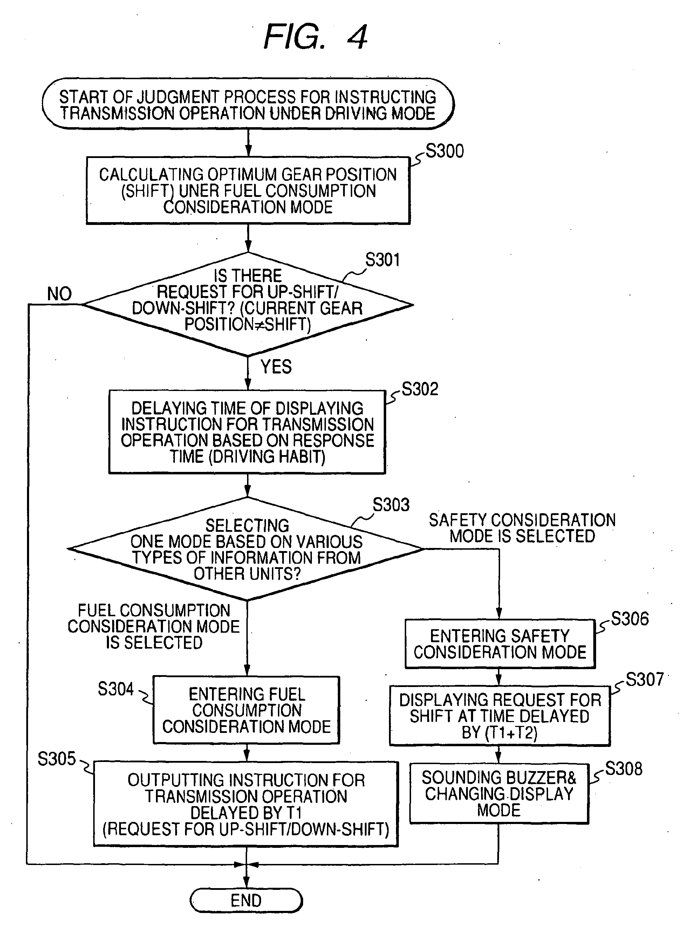

A description will be given of the action of the transmission operation instruction device according to the third embodiment of the present invention with reference to FIG. 4.

FIG. 4 is a flow chart showing the operation of the transmission operation instruction device according to the third embodiment. The difference between the third embodiment and the first embodiment will be mainly explained.

The microcomputer 11 stores response-time information of the driver (regarding the driver's habit in driving), counted from the time of displaying the instruction for the transmission operation, as the driver's past driving condition or state regarding the instruction for the transmission operation. That is, the above driver's response time is the length of time counted from the time of displaying the instruction for the transmission operation until the time of performing the actual operation by the driver. It is acceptable to obtain the actual operation time of the driver based on an engine rotation speed and a vehicle speed or using a sensor capable of detecting the position of a shift lever. (Such a calculating manner for the actual operation time of the driver is effective in the fourth and fifth embodiments described later.)

In step S300, the microcomputer 11 in the ECU 10 calculates the optimum gear position corresponding to both the vehicle speed and the accelerator pedal opening ratio (or the throttle opening ratio) using the shift pattern (or the shift position lines) shown in FIG. 7A. In step S301, the microcomputer 11 in the ECU 10 judges whether or not the calculated optimum gear position is different from the current gear position of the manual transmission device.

In step S302, the microcomputer 11 sets the driver's response time as a delay time T1, for example, into the memory 12 in the ECU 10 when the calculated optimum gear position is different from the current gear position of the manual transmission device and when the up-shift operation or down-shift operation occurs. In step S303, the microcomputer 11 in the ECU 10 further selects the transmission operation mode suitable for the current driving condition or state of the vehicle and driver based on various types of information including the information (for example, the information regarding occurrence of a traffic congestion and a traffic accident, and the like) provided from the car navigation unit 41, the traffic information detection unit 42, the sideslip protection unit 43 and the brake control unit 44. That is, the microcomputer 11 judges whether or not the safety consideration mode is selected (whether or not there is the necessity of delaying the time of displaying the instruction for the transmission operation by the occurrence of the traffic congestion and the like).

On not selecting the safety consideration mode, the microcomputer 11 in the ECU 10 performs the fuel consumption consideration mode (as the standard mode) in step S304, and delays the driver's response time by the time T1 in step 5305, and then outputs the instruction for the transmission operation (namely, outputs the up-shift request or the down-shift request). In more detail, on outputting the up-shift request, the microcomputer 11 in the ECU10 instructs the shift display unit 30 through the meter ECU 20 to light the up-shift display unit 31 at the timing which is delayed by the time T1.

On the other hand, on outputting the down-shift request, the microcomputer 11 in the ECU 10 instructs the shift display unit 30 through the meter ECU 20 to light the down-shift display unit 32 at the timing which is delayed by the time T1.

When selecting the safety consideration mode based on various types of information including the information provided from the car navigation unit 41, the traffic information detection unit 42, the sideslip protection unit 43 and the brake control unit 44, the microcomputer 11 in the ECU 10 shifts the current operation mode to the safety consideration mode in step S306. The microcomputer 11 in the ECU 10 then delays the driver's response time which has included the predetermined time T1 by a predetermined time T2 in step S307. The microcomputer 11 then outputs the instruction for the transmission operation (such as the up-shift request and the down-shift request), and instructs the buzzer 50 through the meter ECU 20 to provide a warning with sound in step S308, or instructs the shift display unit 30 through the meter ECU 20 to change the display mode of the up-shift display unit 31 and the down-shift display unit 32 in the shift display unit 30.

According to the transmission operation instruction device according to the third embodiment of the present invention, the driver's response time is calculated and stored in the memory 12, where the driver's response time is the time counted from the display time of the instruction for the transmission operation on the shift display unit 30 to the actual response time of the driver. Then, on selecting the safety consideration mode, the timing of displaying the information to the driver is delayed based on the driver's response time when compared with the display timing on the fuel consumption consideration mode (as the standard mode). Accordingly, on delaying the display timing based on the driver's response time (corresponding to the driver's habit during the driving), it is possible to select the display mode suitable for the driver's habit or condition under the selection of the safety consideration mode which further delays the time of displaying the instruction for the up-shift operation.

### Fourth embodiment

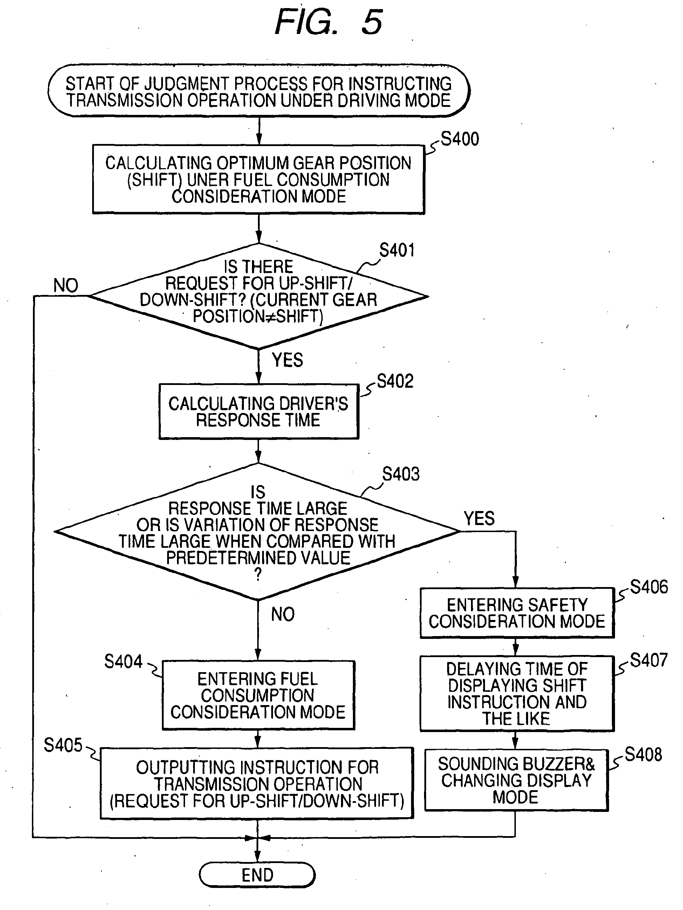

A description will be given of the action of the transmission operation instruction device according to the fourth embodiment of the present invention with reference to FIG. 5. FIG. 5 is a flow chart showing the operation of the transmission operation instruction device of the fourth embodiment. The difference between the fourth embodiment and the first embodiment will be mainly explained.

The microcomputer 11 in the ECU 10 stores in the memory 12 the response-time information of the driver (as the driver's habit in driving) counted from the timing of displaying the instruction of the transmission operation as the driver's past driving condition or state. Such a driver's response time is the length of time counted from the time of displaying the instruction for the transmission operation to the time of performing the actual operation by the driver.

In step S400, the microcomputer 11 in the ECU 10 calculates the optimum gear position corresponding to both the vehicle speed and the accelerator pedal opening ratio (or the throttle opening ratio) using the shift pattern (or the shift position line) shown in FIG. 7A. In step S401, the microcomputer 11 judges whether or not the calculated optimum gear position is different from the current gear position of the manual transmission device.

In step S404, the microcomputer 11 selects the fuel consumption consideration mode (as the standard mode which firstly considers the fuel consumption of the vehicle) when the calculated optimum gear position is different from the current gear position of the manual transmission device. The microcomputer 11 then instructs the shift display unit 30 to display the information regarding the transmission operation mode through the meter ECU 20 in step S405. At this time, in step S402 the microcomputer 11 calculates the response time of the driver counted to the actual driver's operation time from the time of displaying the instruction for the transmission operation on the shift display unit 30. In step S403, the microcomputer 11 in the ECU 10 judges the magnitude of the driver's response time or its variation. In more detail, the microcomputer 11 judges whether or not the actual driver's response time is delayed from the driver's response time which has been stored in the memory 12 per driver is delayed by a threshold value or more, and judges whether or not the driver's response time has the variation of more than the threshold value. The microcomputer 11 selects the fuel consumption operation mode (as the standard mode which firstly considers the fuel consumption efficiency or fuel economy for the vehicle) in step S404 when judging that the driver's response time or its variation is smaller than the threshold value. The microcomputer 11 then instructs the shift display unit 30 through the meter ECU 20 to display the permission or instruction of performing the transmission operation.

The "threshold value" described above may be either a predetermined value which is determined in advance or an updatable value which is varied and updated by various factors such as actual running state of a vehicle and a driver's driving condition.

On the contrary, when the judgment result in step S403 indicates the presence of a large response time or variation (when compared with the threshold value), the operation flow goes to step S406, and the microcomputer 11 in the ECU 10 selects the safety consideration mode for putting the driver's safety first. In the safety consideration mode, in step S407, the timing of displaying the instruction for the transmission operation is delayed on the shift display unit 30 when compared with the case in the fuel consumption consideration mode (as the standard mode), or the microcomputer 11 prohibits the display of the instruction for the transmission operation on the shift display unit 30 through the meter ECU 20. On judging that the driver has a bad physical condition when the driver's response time or its variation is greater than the threshold value, the microcomputer 11 in the ECU 10 instructs the shift display unit 30 through the meter ECU 20 to display the instruction for the transmission operation without any acceleration. Thus, the microcomputer 11 in the ECU 10 can instruct the driver of the vehicle through the shift display unit 30 to perform the transmission operation without any accelerated speed while keeping the driver's safety with good fuel consumption.

In addition, under the safety consideration mode, the microcomputer 11 in the ECU 10 instructs the buzzer 50 to sound through the meter ECU 20 in step S408, or instructs the shift display unit 30 to change its display mode in order to inform to the driver that the current operation mode enters the safety consideration mode. The driver thereby recognizes that the current operation mode is the safety consideration mode through the buzzer 50.

As described above, the microcomputer 11 in the ECU 10 in the transmission operation instruction device outputs the instruction of the transmission operation capable of driving the vehicle with good fuel consumption by performing steps S400, S401, S402, S403, S404 and S405 when the driver has a good physical condition while monitoring the driver's response time or its variation. On the contrary, microcomputer 11 in the ECU 10 performs steps S400, S401, S402, S403, S406, S407 and S408 in order to keep the driver's safety when the driver has a bad physical condition while monitoring the driver's response time or its variation.

### Fifth embodiment

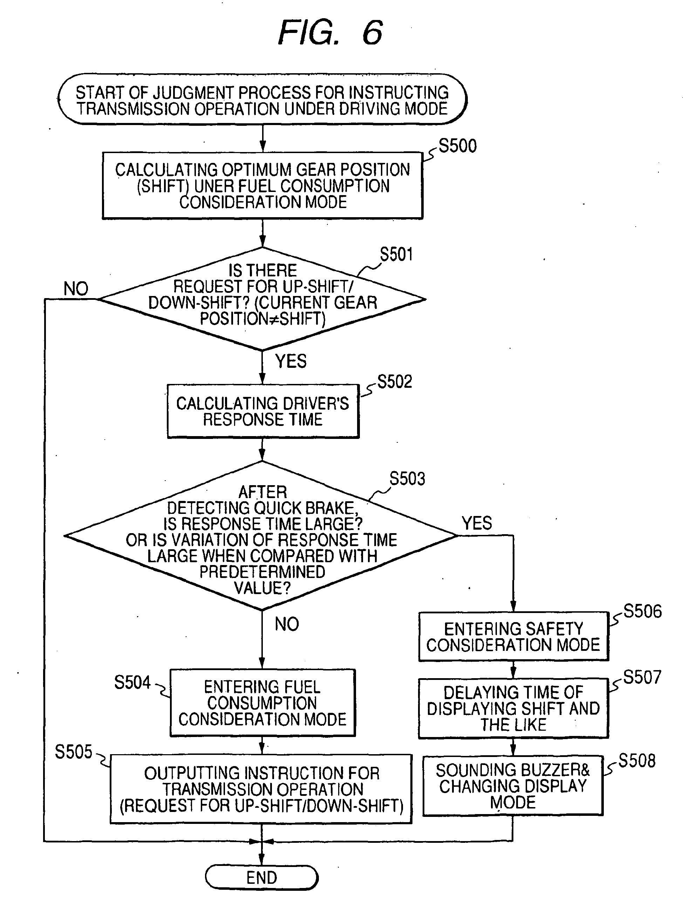

A description will be given of the action of the transmission operation instruction device according to the fifth embodiment of the present invention with reference to FIG. 6. FIG. 6 is a flow chart showing the operation of the transmission operation instruction device according to the fifth embodiment.

The microcomputer 11 in the ECU 10 stores the response-time information of the driver (as the driver's habit during driving) counted from the time of displaying the instruction for the transmission operation as the driver's past driving condition or state. Such a driver's response time is the length of time counted from the time of displaying the instruction for the transmission operation to the time of performing the actual operation by the driver.

In step S500 shown in FIG. 6, the microcomputer 11 in the ECU 10 calculates the optimum gear position corresponding to both the vehicle speed and the accelerator pedal opening ratio (or the throttle opening ratio) using the shift pattern (or the shift position line) shown in FIG. 7A.

In step S501, the microcomputer 11 judges whether or not the calculated optimum gear position is different from the current gear position of the manual transmission device. In step S504, the microcomputer 11 selects the fuel consumption consideration mode (as the standard mode firstly considering the fuel consumption) when the calculated optimum gear position is different from the current gear position of the manual transmission device. The microcomputer 11 in the ECU 10 then instructs the shift display unit 30 to display the transmission operation mode through the meter ECU 20 in step S505.

At this time, in step S502 the microcomputer 11 calculates the actual response time of the driver counted to the time of performing the actual driver's operation from the time of displaying the instruction for the transmission operation on the shift display unit 30 after detecting the occurrence of a quick brake by the river. In step S503, the microcomputer 11 judges the magnitude of the driver's response time or variation thereof. In more detail, the microcomputer 11 in the ECU 10 detects a kind of the driver's quick brake or a quick deceleration by the operation of the brake control device or the driver's brake operation. After this detection, the microcomputer 11 in the ECU 10 judges whether or not the actual driver's response time is delayed from the stored response time of the driver by a threshold value, where the response time of the driver has been stored in the memory 12 in the ECU 10 per driver. The microcomputer 11 selects the fuel consumption operation mode (as the standard mode which firstly considers the fuel consumption or fuel economy) in step S504 when judging that the current driver's response time or variation is smaller than the threshold value regarding the length of time. The microcomputer 11 then instructs the shift display unit 30 to display the instruction of the transmission operation mode through the meter ECU 20.

The "threshold value" described above may be either a predetermined value which is determined in advance or an updatable value which is varied and updated by various factors such as actual running state of a vehicle and a driver's driving condition.

On the contrary, when the judgment result in step S503 indicates that the current driver's response time or its variation is larger the threshold value, the operation flow goes to step S506, and the microcomputer 11 selects the safety consideration mode for firstly maintaining the driver's safety. In the safety consideration mode, in step S507, the microcomputer 11 delays the time of displaying the instruction for the transmission operation on the shift display unit 30 through the meter ECU 20, when compared with the case of the fuel consumption consideration mode (as the standard mode), or prohibits the display of the instruction for the transmission operation on the shift display unit 30. In more detail, when detecting that the current driver's response time or variation thereof is larger than the threshold value (namely, exceeds the stored one) in step S503, the safety consideration mode is maintained. Accordingly, when detecting the large driver's response time or variation after detecting the occurrence of the driver's quick brake, the microcomputer 11 judges that the driver of the vehicle has an uneasy mind, and instructs the shift display unit 30 to display the transmission operation mode without any acceleration. It is thereby possible to instruct the shift display unit 30 to display the transmission operation mode while keeping the driver's safety with good fuel consumption.

In the safety consideration mode, the microcomputer 11 instructs the buzzer 50 to sound through the meter ECU 20 in step S508 or to change the display mode on the shift display unit 30 in order to give a warning to the driver, namely, to inform that the current operation mode enters the safety consideration mode.

As described above, the microcomputer 11 in the ECU 10 in the transmission operation instruction device outputs the instruction for performing the transmission operation of driving the vehicle with good fuel consumption by performing steps S500, S501, S502, S503, S504 and S505 when the driver does not have an uneasy mind while monitoring the driver's response time or the variation thereof after detecting the driver's quick brake. On the contrary, microcomputer 11 in the ECU 10 performs steps S500, S501, S502, S503, S506, S507 and S508 in order to keep the driver's safety when detecting that the driver has an uneasy mind while monitoring the driver's response time or the variation thereof after detecting the driver's quick brake.

In each of the first to fifth embodiments according to the present invention described above, the optimum gear position is calculated based on the shift point lines shown in FIG. 7A and FIG. 7B. The present invention is not limited by this calculation manner. For example, it is possible to calculate the optimum gear position by a simple calculation manner. Although each embodiment described above has explained the vehicle equipped with the manual transmission device, it is possible to apply the concept of the present invention to a vehicle equipped with an automatic transmission device.

While specific embodiments of the present invention have been described in detail, it will be appreciated by those skilled in the art that various modifications and alternatives to those details could be developed in light of the overall teachings of the disclosure. Accordingly, the particular arrangements disclosed are meant to be illustrative only and not limited to the scope of the present invention which is to be given the full breadth of the following claims.

## Claims

1. A transmission operation instruction device comprising:
a transmission operation instruction display unit (30) configured to display a transmission operation for a manual transmission device mounted on a vehicle;
optimum gear position calculation means (11) configured to calculate an optimum gear position corresponding to a vehicle speed and an accelerator pedal opening ratio or a throttle opening ratio;
judgment means (11) configured to judge whether or not the calculated optimum gear position is different from a current gear position of the manual transmission device; and
control means (11) configured to instruct the transmission operation instruction display unit (30) to display an instruction for the transmission operation when a judgment result of the judgment means (11) indicates that the current gear position is different from the calculated optimum gear position,
**characterized in that**
the control means (11) selects one of a standard mode and a safety consideration mode based on surrounding information of the vehicle, vehicle condition and a driver's driving condition, where the standard mode gives a higher priority for a fuel economy driving and the safety consideration mode gives a higher priority for a safety driving of the vehicle, and the control means (11) configured to instruct the transmission operation instruction display unit (30) to delay the timing of displaying the instruction for the transmission operation or to prohibit the display of the instruction for the transmission operation on selecting the safety consideration mode when compared with on selecting the standard mode.

2. The transmission operation instruction device as claimed in claim 1, wherein the control means (11) is configured to select one of the standard mode and the safety consideration mode based on information provided from one or more of a car navigation unit (41), a traffic information detection unit (42), a sideslip protection unit (43), and a brake control unit (44), and
the control means (11) is configured to instruct the transmission operation instruction display unit (30) to delay the timing of displaying the instruction for the transmission operation or to prohibit the display of the instruction for the transmission operation on selecting the safety consideration mode when compared with on selecting the standard mode.

3. The transmission operation instruction device according to claim 2, wherein the control means (11) selects the safety consideration mode in order to prevent a shifting operation of the current gear position to a higher gear position when the information provided from the traffic information detection unit (42) indicates the occurrence of traffic congestion or a traffic accident.

4. The transmission operation instruction device according to claim 2, wherein the control means (11) selects one of the safety consideration mode and the standard mode based on time information or weather information provided from the traffic information detection unit (42).

5. The transmission operation instruction device according to claim 2, wherein the control means (11) selects one of the safety consideration mode and the standard mode based on map information provided from the car navigation unit (41).

6. The transmission operation instruction device according to claim 2, wherein the control means (11) selects the safety consideration mode when the sideslip protection unit (43) detects the occurrence of sideslip of the vehicle or the brake control unit (44) detects the occurrence of quick brake of the driver.

7. The transmission operation instruction device according to claim 2, wherein the optimum gear position calculation means (11) calculates the optimum gear position corresponding to the vehicle speed and the accelerator pedal opening ratio or the throttle opening ratio based on a shift point line, and the transmission operation instruction device further comprises power shift pattern changing means (11) configured to select a power shift pattern which is shifted to a high speed side of the shift point line based on a vehicular weight or a weight of burden mounted on a vehicle.

8. The transmission operation instruction device according to any one of claim 2 to claim 7, wherein the control means (11) calculates a response length of time of the driver counted from the time of displaying the instruction for the transmission operation on the transmission operation instruction display unit (30) to the time of actually performing the transmission operation by the driver, and the control means (11) instructs the transmission operation instruction display unit (30) to delay the timing of displaying the instruction of the transmission operation by a time considering the response length of time of the driver when compared with the timing of displaying that under the standard mode.

9. The transmission operation instruction device as claimed in claim 1, wherein the control means (11) is configured to calculate a response length of time of the driver counted from the time of displaying the instruction for the transmission operation on the transmission operation instruction display unit (30) to the time of actually performing the transmission operation by the driver, and
the control means (11) is configured to select the standard mode when the response length of time of the driver or a variation thereof is smaller than a threshold value and to select the safety consideration mode when larger than the threshold value, and
the control means (11) is configured to instruct the transmission operation instruction display unit (30) to delay the timing of displaying the instruction for the transmission operation or to prohibit the display of the instruction for the transmission operation on selecting the safety consideration mode when compared with on selecting the standard mode.

10. The transmission operation instruction device as claimed in claim 1, wherein the control means (11) is configured to calculate a response length of time of the driver counted from the time of displaying the instruction for the transmission operation on the transmission operation instruction display unit (30) to the time of actually performing the transmission operation by the driver after the brake control unit (44) detects a quick brake of the driver, and
the control means (11) is configured to select the standard mode when the response length of time of the driver or a variation thereof is smaller than a threshold value and to select the safety consideration mode when larger than the threshold value, and
the control means (11) is configured to instruct the transmission operation instruction display unit (30) to delay the timing of displaying the instruction for the transmission operation or to prohibit the display of the instruction for the transmission operation on selecting the safety consideration mode when compared with on selecting the standard mode.

11. The transmission operation instruction device as claimed in any one of claims 2 to 10, wherein the transmission operation instruction device further comprises a buzzer (50), and
when selecting the safety consideration mode, the control means (10) instructs the buzzer (50) to sound or the transmission operation instruction display unit (30) to change a display mode thereon.

## Patentansprüche

1. Getriebebetätigungsanweisungsvorrichtung, aufweisend:
eine Getriebebetätigungsanweisungsanzeigeeinheit (30), die konfiguriert ist, für eine Schaltgetriebevorrichtung, die an einem Fahrzeug montiert ist, eine Getriebebetätigung anzuzeigen;
eine Optimalgangstufenberechnungseinrichtung (11), die konfiguriert ist, eine optimale Gangstufe entsprechend einer Fahrzeuggeschwindigkeit und einem Gaspedalöffnungsverhältnis oder einem Drosselklappenöffnungsverhältnis zu berechnen;
eine Beurteilungseinrichtung (11), die konfiguriert ist, zu beurteilen, ob die berechnete optimale Gangstufe sich von einer gegenwärtigen Gangstufe der Schaltgetriebevorrichtung unterscheidet oder nicht; und
eine Steuereinrichtung (11), die konfiguriert ist, die Getriebebetätigungsanweisungsanzeigeeinheit (30) anzuweisen, eine Anweisung für die Getriebebetätigung anzeigen, wenn ein Beurteilungsergebnis der Beurteilungseinrichtung (11) anzeigt, dass die gegenwärtige Gangstufe sich von der berechneten optimalen Gangstufe unterscheidet,
**dadurch gekennzeichnet, dass**
die Steuereinrichtung (11) eine einer Standardbetriebsart und einer Sicherheitsberücksichtigungsbetriebsart auf der Grundlage einer Umgebungsinformation des Fahrzeugs, eines Fahrzeugzustands und eines Fahrer-Fahrzustands auswählt, wobei die Standardbetriebsart einem Fahren unter Kraftstoffwirtschaftlichkeit eine höhere Priorität gibt und die Sicherheitsberücksichtigungsbetriebsart einem sicheren Fahren des Fahrzeugs eine höhere Priorität gibt, und die Steuereinrichtung (11) konfiguriert ist, die Getriebebetätigungsanweisungsanzeigeeinheit (30) anzuweisen, im Vergleich damit, dass die Standardbetriebsart ausgewählt wurde, den Zeitpunkt eines Anzeigens der Anweisung für die Getriebebetätigung zu verzögern oder die Anzeige der Anweisung für die Getriebebetätigung zu verhindern, wenn die Sicherheitsberücksichtigungsbetriebsart ausgewählt wurde.

2. Getriebebetätigungsanweisungsvorrichtung gemäß Anspruch 1, **dadurch gekennzeichnet, dass** die Steuereinrichtung (11) konfiguriert ist, eine der Standardbetriebsart und der Sicherheitsberücksichtigungsbetriebsart auf der Grundlage einer Information, die von einer oder mehreren einer Fahrzeugnavigationseinheit (41), einer Verkehrsinformationserfassungseinheit (42), einer Schleuderschutzeinheit (43) und einer Bremssteuereinheit (44) bereitgestellt ist, auszuwählen, und
die Steuereinrichtung (11) konfiguriert ist, die Getriebebetätigungsanweisungsanzeigeeinheit (30) anzuweisen, im Vergleich damit, dass die Standardbetriebsart ausgewählt wurde, den Zeitpunkt eines Anzeigens der Anweisung für die Getriebebetätigung zu verzögern oder die Anzeige der Anweisung für die Getriebebetätigung zu verhindern, wenn die Sicherheitsberücksichtigungsbetriebsart ausgewählt wurde.

3. Getriebebetätigungsanweisungsvorrichtung gemäß Anspruch 2, **dadurch gekennzeichnet, dass** die Steuereinrichtung (11) die Sicherheitsberücksichtigungsbetriebsart auswählt, um einen Schaltvorgang der gegenwärtigen Gangstufe in eine höhere Gangstufe zu verhindern, wenn die von der Verkehrsinformationserfassungseinheit (42) bereitgestellte Information das Auftreten eines Verkehrsstaus oder eines Verkehrsunfalls angibt.

4. Getriebebetätigungsanweisungsvorrichtung gemäß Anspruch 2, **dadurch gekennzeichnet, dass** die Steuereinrichtung (11) eine der Sicherheitsberücksichtigungsbetriebsart und der Standardbetriebsart auf der Grundlage einer von der Verkehrsinformationserfassungseinheit (42) bereitgestellten Zeitinformation oder Wetterinformation auswählt.

5. Getriebebetätigungsanweisungsvorrichtung gemäß Anspruch 2, **dadurch gekennzeichnet, dass** die Steuereinrichtung (11) eine der Sicherheitsberücksichtigungsbetriebsart und der Standardbetriebsart auf der Grundlage einer von der Fahrzeugnavigationseinheit (41) bereitgestellten Karteninformation auswählt.

6. Getriebebetätigungsanweisungsvorrichtung gemäß Anspruch 2, **dadurch gekennzeichnet, dass** die Steuereinrichtung (11) die Sicherheitsberücksichtigungsbetriebsart auswählt, wenn die Schleuderschutzeinheit (43) das Auftreten eines seitlichen Rutschens des Fahrzeugs erfasst oder die Bremssteuereinheit (44) das Auftreten einer schnellen Bremsung des Fahrers erfasst.

7. Getriebebetätigungsanweisungsvorrichtung gemäß Anspruch 2, **dadurch gekennzeichnet, dass** die Optimalgangstufenberechnungseinheit (11) die optimale Gangstufe entsprechend der Fahrzeuggeschwindigkeit und dem Gaspedalöffnungsverhältnis oder dem Drosselklappenöffnungsverhältnis auf der Grundlage einer Schaltpunktlinie berechnet und die Getriebebetätigungsanweisungsvorrichtung des Weiteren eine Lastschaltmuster-Änderungseinrichtung (11) aufweist, welche konfiguriert ist, ein Lastschaltmuster auszuwählen, welches zu einer Seite einer hohen Drehzahl der Schaltpunktlinie verschoben ist, auf der Grundlage eines Fahrzeuggewichts oder einer auf dem Fahrzeug montierten Gewichtsbelastung.

8. Getriebebetätigungsanweisungsvorrichtung gemäß einem der Ansprüche 2 bis 7, **dadurch gekennzeichnet, dass** die Steuereinrichtung (11) eine Antwortzeitlänge des Fahrers, gezählt von der Zeit eines Anzeigens der Anweisung für die Getriebebetätigung auf der Getriebebetätigungsanweisungsanzeigeeinheit (30) bis zu der Zeit eines tatsächlichen Durchführens der Getriebebetätigung durch den Fahrer, berechnet und die Steuereinrichtung (11) die Getriebebetätigungsanweisungsanzeigeeinheit (30) anweist, die Zeit eines Anzeigens der Anweisung der Getriebebetätigung um eine Zeit, welche die Antwortzeitlänge des Fahrers berücksichtigt, im Vergleich mit der Zeit eines Anzeigens derselben unter der Standardbetriebsart zu verzögern.

9. Getriebebetätigungsanweisungsvorrichtung gemäß Anspruch 1, **dadurch gekennzeichnet, dass** die Steuereinrichtung (11) konfiguriert ist, eine Antwortzeitlänge des Fahrers, gezählt von der Zeit eines Anzeigens der Anweisung für die Getriebebetätigung auf der Getriebebetätigungsanweisungsanzeigeeinheit (30) bis zu der Zeit eines tatsächlichen Durchführens der Getriebebetätigung durch den Fahrer, zu berechnen, und
die Steuereinrichtung (11) konfiguriert ist, die Standardbetriebsart auszuwählen, wenn die Antwortzeitlänge des Fahrers oder eine Variation hiervon kleiner als ein Schwellenwert ist, und die Sicherheitsberücksichtigungsbetriebsart auszuwählen, wenn sie länger als der Schwellenwert ist, und
die Steuereinrichtung (11) konfiguriert ist, die Getriebebetätigungsanweisungsanzeigeeinheit (30) anzuweisen, im Vergleich damit, dass die Standardbetriebsart ausgewählt wurde, die Zeit eines Anzeigens der Anweisung für die Getriebebetätigung zu verzögern oder die Anzeige der Anweisung für die Getriebebetätigung zu verhindern, wenn die Sicherheitsberücksichtigungsbetriebsart ausgewählt wurde.

10. Getriebebetätigungsanweisungsvorrichtung gemäß Anspruch 1, **dadurch gekennzeichnet, dass** die Steuereinrichtung (11) konfiguriert ist, eine Antwortzeitlänge des Fahrers, gezählt von der Zeit eines Anzeigens der Anweisung für die Getriebebetätigung auf der Getriebebetätigungsanweisungsanzeigeeinheit (30) bis zu der Zeit eines tatsächlichen Durchführens der Getriebebetätigung durch den Fahrer, nachdem die Bremssteuereinheit (44) eine schnelle Bremsung des Fahrers erfasst hat, zu berechnen, und
die Steuereinrichtung (11) konfiguriert ist, die Standardbetriebsart auszuwählen, wenn eine Antwortzeitlänge des Fahrers oder eine Variation hiervon kleiner als ein Schwellenwert ist, und die Sicherheitsberücksichtigungsbetriebsart auszuwählen, wenn sie länger als der Schwellenwert ist, und
die Steuereinrichtung (11) konfiguriert ist, die Getriebebetätigungsanweisungsanzeigeeinheit (30) anzuweisen, im Vergleich damit, dass die Standardbetriebsart ausgewählt wurde, die Zeit eines Anzeigens der Anweisung für die Getriebebetätigung zu verzögern oder die Anzeige der Anweisung für die Getriebebetätigung zu verhindern, wenn die Sicherheitsberücksichtigungsbetriebsart ausgewählt wurde.

11. Getriebebetätigungsanweisungsvorrichtung gemäß einem der Ansprüche 2 bis 10, **dadurch gekennzeichnet, dass** die Getriebebetätigungsanweisungsvorrichtung des Weiteren einen Summer (50) aufweist, und
die Steuereinrichtung (10), den Summer (50) anweist, zu erklingen, oder die Getriebebetätigungsanweisungsanzeigeeinheit (30), eine Anzeigebetriebsart hierauf zu ändern, wenn sie die Sicherheitsberücksichtigungsbetriebsart auswählt.

## Revendications

1. Dispositif d'instruction d'opération de boîte de vitesses, comprenant :
une unité d'affichage d'instruction d'opération de boîte de vitesses (30) configurée pour afficher une opération de boîte de vitesses pour un dispositif de boîte de vitesses manuelle monté sur un véhicule ;
des moyens de calcul de position de vitesse optimum (11) configurés pour calculer une position de vitesse optimum correspondant à une vitesse de véhicule et un rapport d'ouverture de pédale d'accélérateur ou un rapport d'ouverture de papillon des gaz ;
des moyens d'évaluation (11) configurés pour décider si oui ou non la position de vitesse optimum calculée est différente d'une position de vitesse actuelle du dispositif de boîte de vitesses manuelle ; et
des moyens de commande (11) configurés pour commander l'unité d'affichage d'instruction d'opération de boîte de vitesses (30) pour afficher une instruction pour l'opération de boîte de vitesses lorsqu'un résultat d'évaluation des moyens d'évaluation (11) indique que la position de vitesse actuelle est différente de la position de vitesse optimum calculée,
**caractérisé en ce que**
les moyens de commande (11) sélectionnent un mode parmi un mode standard et un mode de considération de sécurité sur la base d'informations d'environnement du véhicule, de la condition de véhicule et de la condition de conduite d'un conducteur, où le mode standard donne une priorité plus importante pour une conduite d'économie de carburant et le mode de considération de sécurité donne une priorité plus importante pour une conduite de sécurité du véhicule, et les moyens de commande (11) sont configurés pour commander l'unité d'affichage d'instruction d'opération de boîte de vitesses (30) pour retarder le moment d'affichage de l'instruction pour l'opération de boîte de vitesses ou pour empêcher l'affichage de l'instruction pour l'opération de boîte de vitesses lors de la sélection du mode de considération de sécurité par rapport à lors de la sélection du mode standard.

2. Dispositif d'instruction d'opération de boîte de vitesses selon la revendication 1, dans lequel les moyens de commande (11) sont configurés pour sélectionner un mode parmi le mode standard et le mode de considération de sécurité sur la base d'informations fournies à partir d'une ou de plusieurs parmi une unité de navigation de voiture (41), une unité de détection d'informations de circulation (42), une unité de protection contre le dérapage (43), et une unité de commande de frein (44), et
les moyens de commande (11) sont configurés pour commander l'unité d'affichage d'instruction d'opération de boîte de vitesses (30) pour retarder le moment d'affichage de l'instruction pour l'opération de boîte de vitesses ou pour empêcher l'affichage de l'instruction pour l'opération de boîte de vitesses lors de la sélection du mode de considération de sécurité par rapport à lors de la sélection du mode standard.

3. Dispositif d'instruction d'opération de boîte de vitesses selon la revendication 2, dans lequel les moyens de commande (11) sélectionnent le mode de considération de sécurité afin d'empêcher une opération de changement de vitesses de la position de vitesse actuelle à une position de vitesse plus importante lorsque les informations fournies à partir de l'unité de détection d'informations de circulation (42) indiquent l'occurrence de congestion de circulation ou un accident de la circulation.

4. Dispositif d'instruction d'opération de boîte de vitesses selon la revendication 2, dans lequel les moyens de commande (11) sélectionnent un mode parmi le mode de considération de sécurité et le mode standard sur la base d'informations de temps ou d'informations météorologiques fournies à partir de l'unité de détection d'informations de circulation (42).

5. Dispositif d'instruction d'opération de boîte de vitesses selon la revendication 2, dans lequel les moyens de commande (11) sélectionnent un parmi le mode de considération de sécurité et le mode standard sur la base d'informations de carte fournies à partir de l'unité de navigation de voiture (41).

6. Dispositif d'instruction d'opération de boîte de vitesses selon la revendication 2, dans lequel les moyens de commande (11) sélectionnent le mode de considération de sécurité lorsque l'unité de protection contre le dérapage (43) détecte l'occurrence de dérapage du véhicule ou l'unité de commande de frein (44) détecte l'occurrence de freinage rapide du conducteur.

7. Dispositif d'instruction d'opération de boîte de vitesses selon la revendication 2, dans lequel les moyens de calcul de position de vitesse optimum (11) calculent la position de vitesse optimum correspondant à la vitesse du véhicule et le rapport d'ouverture de pédale d'accélérateur ou le rapport d'ouverture de papillon des gaz sur la base d'une ligne de point de changement de vitesses, et le dispositif d'instruction d'opération de boîte de vitesses comprend en outre des moyens de changement de modèle de changement de puissance (11) configurés pour sélectionner un modèle de changement de puissance qui passe à un côté de grande vitesse de la ligne de point de changement de vitesses sur la base d'un poids de véhicule ou un poids d'une charge montée sur un véhicule.

8. Dispositif d'instruction d'opération de boîte de vitesses selon l'une quelconque de la revendication 2 à la revendication 7, dans lequel les moyens de commande (11) calculent une durée de temps de réponse du conducteur comptée à partir du moment d'affichage de l'instruction pour l'opération de boîte de vitesses sur l'unité d'affichage d'instruction d'opération de boîte de vitesses (30) jusqu'au moment d'exécution réelle de l'opération de boîte de vitesses par le conducteur, et les moyens de commande (11) commandent l'unité d'affichage d'instruction d'opération de boîte de vitesses (30) pour retarder le moment d'affichage de l'instruction de l'opération de boîte de vitesses selon un temps considérant la durée de réponse du conducteur par rapport au moment d'affichage de celle-ci dans le mode standard.

9. Dispositif d'instruction d'opération de boîte de vitesses selon la revendication 1, dans lequel les moyens de commande (11) sont configurés pour calculer une durée de temps de réponse du conducteur comptée à partir du moment d'affichage de l'instruction pour l'opération de boîte de vitesses sur l'unité d'affichage d'instruction d'opération de boîte de vitesses (30) jusqu'au moment d'exécution réelle de l'opération de boîte de vitesses par le conducteur, et
les moyens de commande (11) sont configurés pour sélectionner le mode standard lorsque la durée de temps de réponse du conducteur ou une variation de celle-ci est inférieure à une valeur seuil et pour sélectionner le mode de considération de sécurité lorsqu'elle est supérieure à la valeur seuil, et les moyens de commande (11) sont configurés pour commander l'unité d'affichage d'instruction d'opération de boîte de vitesses (30) pour retarder le moment d'affichage de l'instruction pour l'opération de boîte de vitesses ou pour empêcher l'affichage de l'instruction pour l'opération de boîte de vitesses lors de la sélection du mode de considération de sécurité par rapport à lors de la sélection du mode standard.

10. Dispositif d'instruction d'opération de boîte de vitesses selon la revendication 1, dans lequel les moyens de commande (11) sont configurés pour calculer une durée de temps de réponse du conducteur comptée à partir du moment d'affichage de l'instruction pour l'opération de boîte de vitesses sur l'unité d'affichage d'instruction d'opération de boîte de vitesses (30) jusqu'au moment d'exécution réelle de l'opération de boîte de vitesses par le conducteur après que l'unité de commande de frein (44) détecte un freinage rapide du conducteur, et
les moyens de commande (11) sont configurés pour sélectionner le mode standard lorsque la durée de temps de réponse du conducteur ou une variation de celle-ci est inférieure à une valeur seuil et pour sélectionner le mode de considération de sécurité lorsqu'elle est supérieure à la valeur seuil, et
les moyens de commande (11) sont configurés pour commander l'unité d'affichage d'instruction d'opération de boîte de vitesses (30) pour retarder le moment d'affichage de l'instruction pour l'opération de boîte de vitesses ou pour empêcher l'affichage de l'instruction pour l'opération de boîte de vitesses lors de la sélection du mode de considération de sécurité par rapport à lors de la sélection du mode standard.

11. Dispositif d'instruction d'opération de boîte de vitesses selon l'une quelconque des revendications 2 à 10, dans lequel le dispositif d'instruction d'opération de boîte de vitesses comprend en outre un avertisseur sonore (50), et
lors de la sélection du mode de considération de sécurité, les moyens de commande (10) commandent l'avertisseur sonore (50) pour qu'il sonne ou l'unité d'affichage d'instruction d'opération de boîte de vitesses (30) pour qu'elle change un mode d'affichage sur celle-ci.
